# EUROPÄISCHE PATENTSCHRIFT

(11) **EP 3 071 852 B1**
(45) Veröffentlichungstag und Bekanntmachung des Hinweises auf die Patenterteilung: **18.07.2018**
(21) Anmeldenummer: 14821048.7
(22) Anmeldetag: 07.11.2014
(51) Int. Cl.: F16D 23/14

(54) **BETÄTIGUNGSVORRICHTUNG ZUM BETÄTIGEN EINER REIBUNGSKUPPLUNG**
ACTUATING DEVICE FOR ACTUATING A FRICTIONAL CLUTCH
DISPOSITIF D'ACTIONNEMENT SERVANT À ACTIONNER UN EMBRAYAGE À FRICTION

(30) Priorität: 21.11.2013 DE 102013223782
(43) Veröffentlichungstag der Anmeldung: 28.09.2016
(73) Patentinhaber: Schaeffler Technologies AG & Co. KG, 91074 Herzogenaurach (DE)
(72) Erfinder: HUBER, Jens, 74889 Sinsheim (DE); HONSELMANN, Sebastian, 77886 Lauf (DE)
(86) Internationale Anmeldenummer: PCT/DE2014/200622
(87) Internationale Veröffentlichungsnummer: WO 2015/074657

(56) Entgegenhaltungen:
- DE-A1-102009 011 809
- DE-A1-102009 052 059
- DE-A1-102010 033 075
- DE-A1-102012 204 411

## Beschreibung

Die Erfindung betrifft eine Betätigungsvorrichtung zum Betätigen einer Reibungskupplung, insbesondere zum Kuppeln einer Antriebswelle eines Kraftfahrzeugmotors mit mindestens einer Getriebeeingangswelle eines Kraftfahrzeuggetriebes, mit deren Hilfe die Reibungskupplung geschlossen und/oder geöffnet werden kann.

Aus DE 10 2012 204 548 A1 ist eine Betätigungsvorrichtung zum Betätigen einer Reibungskupplung bekannt, bei der ein schwenkbarer Hebel eine an einer Führungshülse geführte Schiebehülse axial verschiebt, damit die Schiebehülse eine Anpressplatte der Reibungskupplung verlagert. Der Hebel greift über eine gerundete Kalotte an einer ebenen Fläche der Schiebehülse an, wobei die Führung des Schiebehülse an der Führungshülse einen begrenzten Versatz in radialer Richtung zulässt, um einen radiale Verlagerung des Angriffspunkts des schwenkbaren Hebels an der axial verlagerbaren Schiebehülse auszugleichen.

Aus der DE 2010 10 033 075 A1 ist weiterhin eine Betätigungsvorrichtung bekannt, bei welcher eine Drahtformfeder den Aktorhebel radial umgreift und diesen axial mit der Hülse verspannt.

Auch in der DE 10 2009 011 809 A1 ist eine Betätigungsvorrichtung mit Hebel und Hülse gezeigt. Hier stützt sich der Hebel über gewölbte Auflager an der Hülse entsprechend ab.

Es besteht ein ständiges Bedürfnis mit einem geringen konstruktiven Aufwand eine Reibungskupplung zu betätigen.

Es ist die Aufgabe der Erfindung Maßnahmen aufzuzeigen, die ein Betätigen einer Reibungskupplung mit einem geringen konstruktiven Aufwand ermöglichen.

Die Lösung der Aufgabe erfolgt erfindungsgemäß durch eine Betätigungsvorrichtung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist eine Betätigungsvorrichtung zum Betätigen einer Reibungskupplung, insbesondere zum Kuppeln einer Antriebswelle eines Kraftfahrzeugmotors mit mindestens einer Getriebeeingangswelle eines Kraftfahrzeuggetriebes, vorgesehen mit einer axial verlagerbaren Schiebehülse zum Verlagern einer Anpressplatte der Reibungskupplung und einem an der Schiebehülse angreifenden schwenkbaren Hebel zum Verlagern der Schiebehülse, wobei die Schiebehülse über den Verlagerungsweg zwischen zwei Endstellungen des Hebels an dem Hebel in radialer Richtung abgestützt ist.

Der schwenkbare Hebel der Betätigungsvorrichtung wird dadurch nicht nur zur Einleitung einer Betätigungskraft verwendet, sondern übernimmt zusätzlich auch die Funktion die Schiebehülse zu führen. Hierzu kann eine geeignete formschlüssige Koppelung des Hebels mit der Schiebehülse vorgesehen sein, die gegebenenfalls ein ausreichendes Spiel zwischen dem Hebel und der Schiebehülse zulässt, um durch die Wandlung der Schwenkbewegung des Hebels in eine axiale Verschiebung der Schiebehülse auftretende Fehlstellungen, beispielsweise durch ein leichtes Verkippen der Schiebehülse um eine, insbesondere horizontale, Kippachse senkrecht zur Axialrichtung der Schiebehülse, ausgleichen zu können. Insbesondere kann durch eine radiale Abstützung und/oder Führung der Schiebehülse an dem Hebel ein Abfallen der Schiebehülse von dem Hebel in Schwerkraftrichtung vermieden werden. Dies ermöglicht es insbesondere eine Führungshülse, an der die Schiebehülse radial abgestützt und in axialer Richtung verschoben werden kann, einzusparen. Stattdessen ist es möglich, die Funktionalität der Führungshülse in den Hebel zu integrieren, so dass durch einfache konstruktive Maßnahmen eine geeignete Führung der Schiebehülse mit einer geringeren Bauteileanzahl ermöglicht ist. Durch die von dem Hebel bereitgestellte Stützfunktion für die Schiebehülse kann ohne signifikanten zusätzlichen konstruktiven Aufwand eine Verlagerung der Schiebehülse mit einer geeigneten Ausrichtung zum Betätigen der Reibungskupplung erreicht werden, so dass ein Betätigen der Reibungskupplung mit einem geringen konstruktiven Aufwand ermöglicht ist.

Die Schiebehülse weist eine an dem Hebel geführte erste Teilhülse und eine begrenzt radial zur ersten Teilhülse verlagerbare zweite Teilhülse auf, wobei die zweite Teilhülse von der ersten Teilhülse, insbesondere über eine Clip-Verbindung, axial verlagerbar ist. Die Verbindung der ersten Teilhülse mit der zweiten Teilhülse kann insbesondere mit einem ausreichendem radialen Spiel erfolgen, so dass die zweite Teilhülse unabhängig von einem Kippwinkel der ersten Teilhülse relativ zur Reibungskupplung im Wesentlichen rein axial verlagerbar ausgeführt sein kann. Ein axialer Versatz durch die Schwenkbewegung des Hebels kann dadurch ausgeglichen werden. Insbesondere bildet die zweite Teilhülse eine in axialer Richtung weisende Lagerfläche zur Anlage an einem Betätigungslager. Das Betätigungslager liegt insbesondere an der von der Schiebehülse wegweisenden Seite an einem Betätigungselement, beispielsweise einer Hebelfeder, der Reibungskupplung an, über das die Anpressplatte der Reibungskupplung verlagert werden kann. Ein radialer Versatz des Betätigungslagers kann durch die zumindest zweiteilige Schiebehülse vermieden werden. Durch die Clip-Verbindung kann die zweite Teilhülse verliersicher mit der ersten Teilhülse verbunden werden, wobei die Clip-Verbindung leicht ein Spiel in axialer und/oder radialer Richtung zwischen der ersten Teilhülse und der zweiten Teilhülse zulassen kann.

Der Hebel kann insbesondere eine Relativbewegung der Schiebehülse zum Hebel in axialer Richtung und/oder in radialer Richtung und/oder in Umfangsrichtung sperren, wobei vorzugsweise der Hebel ein begrenztes Relativspiel der Schiebehülse zum Hebel zulässt. Insbesondere ist die Schiebehülse in einem Zustand, wenn im Wesentlichen keine Betätigungskraft über den Hebel eingeleitet wird, in einer definierten Relativlage an dem Hebel abgestützt und/oder eingehangen. Der Hebel kann zwischen einer ersten Endstellung, in der die Reibungskupplung maximal weit geöffnet ist, und einer zweiten Endstellung, in der die Reibungskupplung maximal weit geschlossen ist, um eine Schwenkstelle um einen vordefinierten maximalen Schwenkwinkel verschwenkt werden. Hierzu kann insbesondere ein Betätigungselement, insbesondere ein einen kugeligen Kopf aufweisender Betätigungspin, tangential gegen den Hebel drücken, wobei der Betätigungspin insbesondere entsprechend zu einer Pedalstellung eines Kupplungspedals, vorzugsweise im Wesentlichen proportional, verlagert werden kann. Insbesondere greift der Hebel zwischen der Schwenkstelle und dem Betätigungselement an der Schiebehülse an. Der Hebel greift insbesondere an zwei oder mehr Kontaktstellen zur Verlagerung der Schiebehülse an der Schiebehülse an. Hierzu kann der Hebel insbesondere gabelartig an der Schiebehülse angreifen. Der Hebel weist insbesondere eine Durchgangsöffnung für mindestens eine Getriebeeingangswelle eines Kraftfahrzeuggetriebes auf, wobei die Durchgangsöffnung vorzugsweise groß genug ist, dass der Hebel über den gesamten Schwenkbereich zwischen den Endstellungen zu der Getriebeeingangswelle beabstandet ist und dadurch nicht an der Getriebeeingangswelle anschlägt.

Die Schiebehülse kann insbesondere einen im Wesentlichen ringzylindrischen Teil aufweisen, dessen Durchmesser groß genug ist mindestens eine Getriebeeingangswelle hindurchzuführen. Insbesondere ist eine im Wesentlichen formschlüssige Koppelung der Schiebehülse mit dem Hebel vorgesehen, die eine radiale Verlagerung der Schiebehülse zum Hebel eliminiert oder vorzugsweise auf ein vordefiniertes radiales Spiel begrenzt, ohne dass die Schiebehülse in radialer Richtung von dem Hebel abfallen kann. Vorzugsweise ist die Schiebehülse verkippbar, insbesondere gelenkig, an dem Hebel abgestützt. Die Schiebehülse kann insbesondere zu einem überwiegenden Anteil von dem Hebel in axialer Richtung verlagert werden, wobei durch die Wandlung der Schwenkbewegung des Hebels in eine im Wesentlichen axiale Verlagerung der Schiebehülse in einem geringeren Umfang eine Verlagerung der Schiebehülse in radialer Richtung und/oder ein Kippen der Schiebehülse um eine senkrecht zur Axialrichtung verlaufenden Kippachse erfolgen kann. Vorzugsweise wird die Verlagerung der Schiebehülse in radialer Richtung und/oder das Kippen der Schiebehülse um eine senkrecht zur Axialrichtung verlaufenden Kippachse durch die Abstützung der Schiebehülse an dem Hebel und/oder durch weitere konstruktive Maßnahmen ausgeglichen, so dass insbesondere eine in axialer Richtung weisende Lagerfläche zur Anlage an einem Betätigungslager bei einer Schwenkbewegung des Hebels zwischen den Endstellungen im Wesentlichen rein axial verschiebbar ist. Das Betätigungslager liegt insbesondere an der von der Schiebehülse wegweisenden Seite an einem Betätigungselement, beispielsweise einer Hebelfeder, der Reibungskupplung an, über das die Anpressplatte der Reibungskupplung verlagert werden kann.

Insbesondere ist die radiale Abstützung der Schiebehülse ausschließlich über eine Abstützung an dem Hebel bereitgestellt ist. Weitere Bauteile mit der Funktion die Schiebehülse radial abstützen und/oder eine Verlagerung der Schiebehülse in radialer Richtung zu begrenzen können eingespart werden. Dadurch ist insbesondere eine gesonderte separate Führungshülse eingespart, so dass die Betätigungsvorrichtung für die radiale Abstützung der Schiebehülse führungshülsfenfrei ausgestaltet ist. Dadurch ergibt sich eine reduzierte Bauteileanzahl für die Betätigungsvorrichtung, die geringe Herstellungs- und Montagekosten ermöglicht.

Vorzugsweise ist die Schiebehülse an dem Hebel über mindestens einen in eine Vertiefung eingreifenden Führungssteg abgestützt. Die Schiebehülse ist insbesondere über den in der Vertiefung eingesetzten Führungssteg an dem Hebel eingehakt. Vorzugsweise ist die Vertiefung durch den Hebel und der Führungssteg durch die Schiebehülse ausgestaltet. Beispielsweise ist die Vertiefung in einem in axialer Richtung verlaufenden Querschnitt im Wesentlichen U-förmig mit einer zum Führungssteg weisenden Aufnahmeöffnung ausgeführt, so dass der Führungssteg von den Schenkeln der U-förmigen Aufnahmeöffnung radial innen und radial außen abstützbar ist. Durch den Abstand der Schenkel im Vergleich zur Dicke des Führungsstegs in radialer Richtung kann ein zulässiges radiales Spiel und/oder ein zulässiger Kippwinkel um eine im Wesentlichen senkrecht zur Axialrichtung der Schiebehülse verlaufenden Kippachse eingestellt werden. Insbesondere kann sich die Schiebehülse unter Schwerkrafteinfluss mit Hilfe des in der Vertiefung eingesetzten Führungsstegs selbst mit dem Hebel arretieren, so dass ein unbeabsichtigtes Abfallen der Schiebehülse von dem Hebel automatisch vermieden werden kann.

Besonders bevorzugt weist der Führungssteg eine gerundete, insbesondere kugeligen, Stirnseite zur Ausbildung einer gerundeten Kontaktfläche zwischen der Schiebehülse und dem Hebel auf, wobei insbesondere der Führungssteg als im Wesentlichen zylindrischer Bolzen ausgestaltet ist. Durch die gerundete Kontaktfläche kann bei einer korrespondierenden Ausformung der Vertiefung eine flächige Anlage der Schiebehülse an dem Hebel, insbesondere über den gesamten Schwenkbereich des Hebels, erreicht werden, wodurch sich eine geringe Flächenpressung und ein geringerer Verschleiß einstellt. Der Führungssteg und die Vertiefung können dadurch beispielsweise ein Gelenk, insbesondere ein Kugelgelenk ausbilden. Eine maximale Relativwinkellage des Führungsstegs relativ zur Vertiefung kann beispielsweise durch Anschläge begrenzt sein, wobei der Anschlag insbesondere durch einen sich an dem gerundeten Teil anschließenden ebenen Teil ausgebildet werden kann. Besonders bevorzugt ist mehr als ein Führungssteg vorgesehen, wobei insbesondere die Führungsstege in Umfangsrichtung auf einem im Wesentlichen gemeinsamen Radius gleichmäßig verteilt angeordnet sind.

Insbesondere weist die Schiebehülse ein Abstützelement mit einer in axialer Richtung weisenden im Wesentlichen ebenen Stützseite zur insbesondere ebenen Anlage an dem Hebel auf, wobei das Abstützelement insbesondere als im Wesentlichen zylindrischer Bolzen ausgestaltet ist. Besonders bevorzugt ist mehr als ein Abstützelement vorgesehen, wobei insbesondere die Abstützelemente in Umfangsrichtung auf einem im Wesentlichen gemeinsamen Radius gleichmäßig verteilt angeordnet sind. Das Abstützelement kann insbesondere in der ersten Endstellung, in der die Reibungskupplung maximal weit geöffnet ist und, sofern überhaupt, nur geringe Axialkräfte an der Schiebehülse angreifen, mit der ebenen Stützseite im Wesentlichen flächig an dem Hebel anliegen. Dadurch stellt sich für die Schiebehülse automatisch eine definierte Relativlage zum Hebel ein. Aus dieser definierten Ausgangslage heraus kann die Schiebehülse bei einem Schwenken des Hebels aus der ersten Endstellung heraus beispielsweise zum Ausgleich eines radialen Versatzes verkippt werden, wobei hierbei das Abstützelement von dem Hebel abheben und/oder lediglich linienförmig an dem Hebel anliegen kann. Insbesondere ist durch das Abstützelement ein Toleranzausgleich in der Art einer Fest- und Loslager-Kombination erreicht.

Vorzugsweise weist der Hebel zur Ausbildung einer Schwenkstelle ein Lagerelement mit einer zumindest begrenzten Verkippsicherung auf, wobei das Lagerelement insbesondere Teil eines Scharnierlagers oder Schlagausgleichslagers ist. Das Lagerelement ist insbesondere aus Messing, Bronze oder einem Sinterwerkstoff hergestellt, die vorzugsweise mit einem Schmiermittel, beispielsweise Öl, benetzt sein können, wodurch Reibung an der Schwenkstelle des Hebels reduziert werden kann. Das Scharnierlager kann insbesondere zwei in einer im Wesentlichen rohrförmigen oder schellenförmigen Öffnung beispielsweise mit einem im Wesentlichen kreisförmigen oder halbkreisförmigen Querschnitt eingesetzten Lagerbolzen aufweisen. Insbesondere kann der Hebel im Bereich des Scharnierlagers eine oder zwei oder mehr abstehende Rippen aufweisen, die bei einer Schwenkbewegung des Hebels in eine korrespondierende Öffnung ein- und teilweise austauchen und/oder an korrespondierenden seitlich versetzten Rippen entlang bewegt werden können. Dadurch kann ein Rotieren um die Schwenkstelle und/oder ein Verkippen des Hebels um seine Längsachse gesperrt werden. Dadurch ist es nicht erforderlich diese Freiheitsgrade durch die Abstützung der Schiebehülse an dem Hebel zu eliminieren, wodurch ein konstruktiv einfacher Aufbau ergibt. Insbesondere bei entsprechenden NVH-Anforderungen ("Noise, Vibration, Harshness" - Anforderungen) kann zur Reduktion von Geräuschentwicklungen das Scharnierlager durch ein Schlagausgleichslager ersetzt werden. In dem Schlagausgleichslager kann ein Kalottenring zwischen dem Hebel und einem insbesondere durch ein feststehendes Kraftfahrzeugbauteil, beispielsweise eine Kupplungsglocke der Reibungskupplung, ausgebildeten Gegenlager einen Ausgleich von Schiefstellungen erreichen. Dadurch wird ein schräger Abhub des Hebels vermieden.

Insbesondere ist die zweite Teilhülse mit der ersten Teilhülse drehfest gekoppelt. Hierzu kann beispielsweise zumindest in einem axialen überlappenden Teilbereich die erste Teilhülse und die zweite Teilhülse eine von der Kreisform abweichende Geometrie, insbesondere Schlüsselweitengeometrie, aufweisen. Dadurch kann sich in Umfangsrichtung eine formschlüssige Verbindung in der Art eines Mehrkants ergeben, wobei in dem axialen überlappenden Teilbereich insbesondere ein ausreichendes Spiel vorgesehen ist, um einen Ausgleich eines radialer Versatzes und/oder eines Kippens der ersten Teilhülse erreichen zu können. Durch die drehfeste Verbindung kann ein Mitdrehen der zweiten Teilhülse durch Schleppmomente eines an der zweiten Teilhülse anliegenden Betätigungslagers vermieden werden, so dass unnötiger Verschleiß vermieden ist.

Vorzugsweise ist an einer von dem Hebel wegweisenden Seite der Schiebehülse eine Zentriereinrichtung zur Zentrierung eines an der Schiebehülse angreifenden Betätigungslagers im Wesentlichen koaxial zu einer Drehachse der Reibungskupplung vorgesehen. Vorzugsweise kann sich dadurch die Schiebehülse automatisch an dem Betätigungslager ausrichten, so dass die Schiebehülse in der zweiten Endstellung, in der die Reibungskupplung geschlossen ist, automatisch im Wesentlichen optimal relativ zum Hebel ausgerichtet ist.

Besonders bevorzugt ist vorgesehen, dass die Schiebehülse zumindest an relativ zum Hebel bewegbaren Kontaktstellen der Schiebehülse zum Hebel eine reibungsreduzierende Beschichtung, insbesondere mit Kunststoff und/oder PTFE, aufweist und/oder aus einem Kunststoffmaterial hergestellt ist. Dadurch können Reibungseffekte und Verschleißeffekte reduziert werden.

Die Erfindung betrifft ferner ein Betätigungsaggregat zum Betätigen einer eine erste Reibungskupplung und eine zweite Reibungskupplung aufweisenden Doppelkupplung, mit einer ersten Betätigungsvorrichtung, die wie vorstehend beschrieben aus- und weitergebildet sein kann, zum Betätigen der ersten Reibungskupplung und einer zweiten Betätigungsvorrichtung, die wie vorstehend beschrieben aus- und weitergebildet sein kann, zum Betätigen der zweiten Reibungskupplung. Insbesondere ist die Schiebehülse der ersten Betätigungsvorrichtung koaxial zur Schiebehülse der zweiten Betätigungsvorrichtung angeordnet. Vorzugsweise ist der Hebel der ersten Betätigungsvorrichtung zum Hebel der zweiten Betätigungsvorrichtung in Umfangsrichtung, insbesondere um 90° ± 5°, versetzt angeordnet. Durch die von dem Hebel bereitgestellte Stützfunktion für die Schiebehülse kann ohne signifikanten zusätzlichen konstruktiven Aufwand eine Verlagerung der Schiebehülse mit einer geeigneten Ausrichtung zum Betätigen der Reibungskupplung erreicht werden, so dass ein Betätigen der Reibungskupplungen der Doppelkupplung mit einem geringen konstruktiven Aufwand ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Schnittansicht eines Teils einer Betätigungsvorrichtung,
Fig. 2: eine schematische geschnittene Seitenansicht der Betätigungsvorrichtung aus Fig. 1 und
Fig. 3: eine schematische Draufsicht der Betätigungsvorrichtung aus Fig. 2.

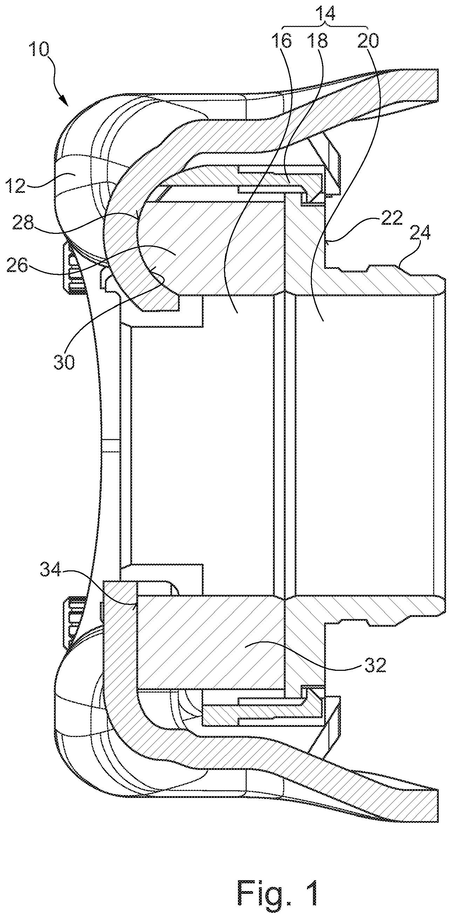

Die in Fig. 1 teilweise dargestellte Betätigungsvorrichtung 10 weist einen Hebel 12 auf, der eine Schiebehülse 14 zu einem Großteil in axialer Richtung verlagern kann. Im dargestellten Ausführungsbeispiel weist die Schiebehülse 14 eine an dem Hebel 12 angreifende erste Teilhülse 16 und eine über eine Clip-Verbindung 18 mit der ersten Teilhülse 16 verliersicher verbundene zweite Teilhülse 20 auf, wobei die Clip-Verbindung 18 einen begrenzten radialen und axialen Versatz der ersten Teilhülse 16 zur zweiten Teilhülse 20 sowie ein begrenztes Verkippen der ersten Teilhülse 16 zur zweiten Teilhülse 20 zulässt. Die zweite Teilhülse 20 kann über eine im Wesentlichen ringförmige Lagerfläche 22 an einem Betätigungslager angreifen, um eine Anpressplatte einer Reibungskupplung zum Kuppeln einer Antriebswelle eines Kraftfahrzeugmotors mit mindestens einer Getriebeeingangswelle eines Kraftfahrzeuggetriebes zum Öffnen und/oder Schließen der Reibungskupplung axial zu verlagern. Das Betätigungslager kann über eine Zentriereinrichtung 24 in Form einer Einführungsschräge mit der zweiten Teilhülse 20 zentriert werden.

Im dargestellten Ausführungsbeispiel weist die erste Teilhülse 16 der Schiebehülse 14 einen in axialer Richtung abstehenden Führungssteg 26 auf. Der Führungssteg 26 ist im Wesentlichen als zylindrischer Bolzen mit einer kugeligen Stirnseite 28 ausgestaltet. Der Führungssteg 26 ist in eine kugelschalenförmige Vertiefung 30 eingesetzt, so dass zwischen der kugeligen Stirnseite 28 und der kugelschalenförmige Vertiefung 30 ein Kugelgelenk ausgebildet ist. Der Führungssteg 26 kann dadurch in seiner Relativbewegung zum Hebel 12 in radialer Richtung und in Umfangsrichtung begrenzt und abgestützt sein. Insbesondere kann ein Betätigungselement der Reibungskupplung im unbetätigten Zustand der Reibungskupplung mit einer leichten Federkraft über das Betätigungslager auf die Schiebehülse 14 drücken, so dass die axiale Relativlage der Schiebehülse 14 zum Hebel 12 vorgegeben sein kann. Eine Kippbewegung der Schiebehülse 14 um eine senkrecht zur Axialrichtung der Schiebehülse 14 verlaufenden Kippachse, insbesondere unter Schwerkrafteinfluss, kann durch ein Abstützelement 32 begrenzt werden, das im unbetätigten Zustand der Betätigungsvorrichtung 10 mit einer ebenen Stützseite 34 an einen ebenen Bereich des Hebels 12 anliegen kann. Dadurch kann die Schiebehülse 14 über das aus der Vertiefung 30 und den Führungssteg 26 gebildeten Kugelgelenk an dem Hebel 12 eingehakt sein, wobei das Abstützelement 32 ein unbeabsichtigtes Abfallen der Schiebehülse 14 auch ohne radial innerhalb zur Schiebehülse 14 vorgesehenen Führungszylinder ermöglicht.

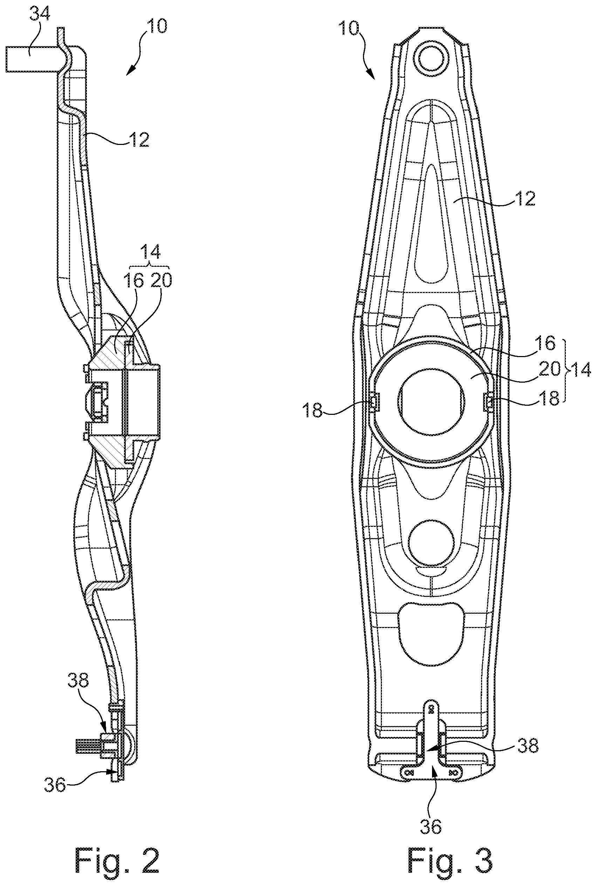

Wie in Fig. 2 dargestellt, kann der Hebel 12 von einem axial verfahrbaren Betätigungspin 34 um eine Schwenkstelle 36 verschenkt werden, wobei die Schiebehülse 14 in Längsrichtung des Hebels 12 zwischen dem Betätigungspin 34 und der Schwenkstelle 36 angeordnet ist. Der Hebel 12 ist an der Schwenkstelle 36 über ein Scharnierlager 38 angelenkt. Das Scharnierlager 38 kann eine Rotation und ein Verkippen des Hebels 12 um seine Längsachse sperren.

Wie in Fig. 3 dargestellt können die erste Teilhülse 16 und die zweite Teilhülse 18 einen von einer Kreisform abweichenden Querschnitt aufweisen. Dadurch kann sich eine drehfeste Verbindung der ersten Teilhülse 16 mit der zweiten Teilhülse 18 ergeben. Insbesondere sind die die erste Teilhülse 16 und die zweite Teilhülse 18 im Bereich der Clip-Verbindung 18 in der Art einer Schlüsselweitengeometrie abgeflacht ausgeführt.

### Bezugszeichenliste

- 10: Betätigungsvorrichtung
- 12: Hebel
- 14: Schiebehülse
- 16: erste Teilhülse
- 18: Clip-Verbindung
- 20: zweite Teilhülse
- 22: Lagerfläche
- 24: Zentriereinrichtung
- 26: Führungssteg
- 28: Stirnseite
- 30: Vertiefung
- 32: Abstützelement
- 34: Betätigungspin
- 36: Schwenkstelle
- 38: Scharnierlager

## Patentansprüche

1. Betätigungsvorrichtung zum Betätigen einer Reibungskupplung, insbesondere zum Kuppeln einer Antriebswelle eines Kraftfahrzeugmotors mit mindestens einer Getriebeeingangswelle eines Kraftfahrzeuggetriebes, mit
einer axial verlagerbaren Schiebehülse (14) zum Verlagern einer Anpressplatte der Reibungskupplung und
einem an der Schiebehülse (14) angreifenden schwenkbaren Hebel (12) zum Verlagern der Schiebehülse (14),
wobei die Schiebehülse (14) über den Verlagerungsweg zwischen zwei Endstellungen des Hebels (12) an dem Hebel (12) in radialer Richtung abgestützt ist, **dadurch gekennzeichnet, dass** die Schiebehülse (14) eine an dem Hebel (12) geführte erste Teilhülse (16) und eine begrenzt radial zur ersten Teilhülse (16) verlagerbare zweite Teilhülse (20) aufweist, wobei die zweite Teilhülse (20) von der ersten Teilhülse (16), insbesondere über eine Clip-Verbindung (18), axial verlagerbar ist.

2. Betätigungsvorrichtung nach Anspruch 1 **dadurch gekennzeichnet, dass** die radiale Abstützung der Schiebehülse (14) ausschließlich über eine Abstützung an dem Hebel (12) bereitgestellt ist.

3. Betätigungsvorrichtung nach Anspruch 1 oder 2 **dadurch gekennzeichnet, dass** die Schiebehülse (14) an dem Hebel (12) über mindestens einen in eine Vertiefung (30) eingreifenden Führungssteg (26) abgestützt ist.

4. Betätigungsvorrichtung nach Anspruch 3 **dadurch gekennzeichnet, dass** der Führungssteg (26) eine gerundete, insbesondere kugeligen, Stirnseite (28) zur Ausbildung einer gerundeten Kontaktfläche zwischen der Schiebehülse (14) und dem Hebel (12) aufweist,
wobei insbesondere der Führungssteg (26) als im Wesentlichen zylindrischer Bolzen ausgestaltet ist.

5. Betätigungsvorrichtung nach einem der Ansprüche 1 bis 4 **dadurch gekennzeichnet, dass** die Schiebehülse (14) ein Abstützelement (32) mit einer in axialer Richtung weisenden im Wesentlichen ebenen Stützseite (34) zur insbesondere ebenen Anlage an dem Hebel (12) aufweist, wobei das Abstützelement (32) insbesondere als im Wesentlichen zylindrischer Bolzen ausgestaltet ist.

6. Betätigungsvorrichtung nach einem der Ansprüche 1 bis 5 **dadurch gekennzeichnet, dass** der Hebel (12) zur Ausbildung einer Schwenkstelle (36) ein Lagerelement mit einer zumindest begrenzten Verkippsicherung aufweist, wobei das Lagerelement insbesondere Teil eines Scharnierlagers (38) oder Schlagausgleichslagers ist.

7. Betätigungsvorrichtung nach Anspruch 1 **dadurch gekennzeichnet, dass** die zweite Teilhülse (20) mit der ersten Teilhülse (16) drehfest gekoppelt ist.

8. Betätigungsvorrichtung nach einem der Ansprüche 1 bis 7 **dadurch gekennzeichnet, dass** an einer von dem Hebel (12) wegweisenden Seite der Schiebehülse (14) eine Zentriereinrichtung (24) zur Zentrierung eines an der Schiebehülse (14) angreifenden Betätigungslagers im Wesentlichen koaxial zu einer Drehachse der Reibungskupplung vorgesehen ist.

9. Betätigungsvorrichtung nach einem der Ansprüche 1 bis 8 **dadurch gekennzeichnet, dass** die Schiebehülse (14) zumindest an relativ zum Hebel (12) bewegbaren Kontaktstellen der Schiebehülse (14) zum Hebel (12) eine reibungsreduzierende Beschichtung, insbesondere mit Kunststoff und/oder PTFE, aufweist und/oder aus einem Kunststoffmaterial hergestellt ist.

## Claims

1. Actuating apparatus for actuating a friction clutch, in particular for coupling a drive shaft of a motor vehicle engine to at least one transmission input shaft of a motor vehicle transmission, having an axially movable sliding sleeve (14) for moving a pressure plate of the friction clutch, and
a pivotable lever (12) which acts on the sliding sleeve (14) in order to move the sliding sleeve (14),
the sliding sleeve (14) being supported on the lever (12) in the radial direction over the movement travel between two end positions of the lever (12), **characterized in that** the sliding sleeve (14) has a first part sleeve (16) which is guided on the lever (12) and a second part sleeve (20) which can be moved radially with respect to the first part sleeve (16) to a limited extent, it being possible for the second part sleeve (20) to be moved axially by the first part sleeve (16), in particular via a clip connection (18).

2. Actuating apparatus according to Claim 1, **characterized in that** the radial support of the sliding sleeve (14) is provided exclusively via a support on the lever (12).

3. Actuating apparatus according to Claim 1 or 2, **characterized in that** the sliding sleeve (14) is supported on the lever (12) via at least one guide web (26) which engages into a depression (30).

4. Actuating apparatus according to Claim 3, **characterized in that** the guide web (26) has a rounded, in particular spherical, end side (28) in order to configure a rounded contact face between the sliding sleeve (14) and the lever (12), the guide web (26) being configured, in particular, as a substantially cylindrical pin.

5. Actuating apparatus according to one of Claims 1 to 4, **characterized in that** the sliding sleeve (14) has a supporting element (32) with a substantially planar supporting side (34) which points in the axial direction in order to bear, in particular in a planar manner, against the lever (12), the supporting element (32) being configured, in particular, as a substantially cylindrical pin.

6. Actuating apparatus according to one of Claims 1 to 5, **characterized in that**, in order to configure a pivoting point (36), the lever (12) has a bearing element with an at least limited anti-tilting safeguard, the bearing element being, in particular, part of a hinged bearing (38) or impact compensation bearing.

7. Actuating apparatus according to Claim 1, **characterized in that** the second part sleeve (20) is coupled fixedly to the first part sleeve (16) so as to rotate with it.

8. Actuating apparatus according to one of Claims 1 to 7, **characterized in that** a centring device (24) for centring an actuating bearing, which acts on the sliding sleeve (14), substantially coaxially with respect to a rotational axis of the friction clutch is provided on a side of the sliding sleeve (14), which side points away from the lever (12).

9. Actuating apparatus according to one of Claims 1 to 8, **characterized in that**, at least at contact points of the sliding sleeve (14) with the lever (12), which contact points can be moved relative to the lever (12), the sliding sleeve (14) has a friction-reducing coating, in particular comprising plastic and/or PTFE, and/or is produced from a plastic material.

## Revendications

1. Ensemble d'actionnement pour l'actionnement d'un embrayage à friction, en particulier pour accoupler un arbre d'entraînement d'un moteur de véhicule automobile à au moins un arbre d'entrée d'une transmission du véhicule automobile, l'ensemble présentant
une douille coulissante (14) mobile axialement qui déplace une plaque de poussée de l'embrayage à friction et
un levier pivotant (12) qui engage la douille coulissante (14) pour déplacer la douille coulissante (14),
la douille coulissante (14) étant soutenue dans la direction radiale sur le levier (12) dans tout son parcours de déplacement entre deux positions d'extrémité du levier (12),
**caractérisé en ce que**
la douille coulissante (14) présente une première partie (16) de douille guidée sur le levier (12) et une deuxième partie (20) de douille apte à être déplacée radialement de manière limitée par rapport à la première partie (16) de douille, la deuxième partie (20) de douille pouvant être déplacée axialement par rapport à la première partie (16) de douille, en particulier par une liaison à pince (18).

2. Ensemble d'actionnement selon la revendication 1,
**caractérisé en ce que** le soutien radial de la douille coulissante (14) est réalisé uniquement par un soutien sur le levier (12).

3. Ensemble d'actionnement selon les revendications 1 ou 2, **caractérisé en ce que** la douille coulissante (14) est soutenue sur le levier (12) par au moins une nervure de guidage (26) engagée dans un creux (30).

4. Ensemble d'actionnement selon la revendication 3,
**caractérisé en ce que** la nervure de guidage (26) présente un côté frontal (28) arrondi, en particulier sphérique, qui forme une surface de contact arrondie entre la douille coulissante (14) et le levier (12), la nervure de guidage (26) étant en particulier configurée comme goujon essentiellement cylindrique.

5. Ensemble d'actionnement selon l'une des revendications 1 à 4, **caractérisé en ce que** la douille coulissante (14) présente un élément de soutien (32) doté d'un côté de soutien (34) essentiellement plan, destiné à venir se placer en particulier en plan sur le levier (12), l'élément de soutien (32) étant configuré en particulier comme goujon essentiellement cylindrique.

6. Ensemble d'actionnement selon l'une des revendications 1 à 5, **caractérisé en ce que** le levier (12) présente pour former un emplacement de pivotement (36) un élément de palier doté d'un blocage au moins limité en basculement, l'élément de palier faisant en particulier partie d'un palier (38) à charnière ou d'un palier de compensation des percussions.

7. Ensemble d'actionnement selon la revendication 1,
**caractérisé en ce que** la deuxième partie (20) de douille est accouplée à rotation solidaire à la première partie (16) de douille.

8. Ensemble d'actionnement selon l'une des revendications 1 à 7, **caractérisé en ce qu'**un dispositif de centrage (24) qui centre un palier d'actionnement engageant la douille coulissante (14) est prévu essentiellement coaxialement par rapport à l'axe de rotation de l'embrayage à friction est prévu sur un côté de la douille coulissante (14) non tourné vers le levier (12).

9. Ensemble d'actionnement selon l'une des revendications 1 à 8, **caractérisé en ce que** la douille coulissante (14) présente au moins sur des emplacements de contact, mobiles par rapport au levier (12), de la douille coulissante (14) avec le levier (12) un revêtement qui réduit le frottement, en particulier en matière synthétique et/ou en PTFE, et/ou est réalisée en une matière synthétique.
